Europäisches Patentamt

European Patent Office

Office européen des brevets

(19)

(11) EP 1 139 090 A2

(12) **EUROPEAN PATENT APPLICATION**

(43) Date of publication:
04.10.2001 Bulletin 2001/40

(51) Int Cl.7: **G01N 21/88**

(21) Application number: 01108209.6

(22) Date of filing: 30.03.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.03.2000 SG 0019125**

(71) Applicant: **Agilent Technologies Inc.
a Delaware Corporation
Palo Alto, CA 94303 (US)**

(72) Inventors:
• **Toh, Peng-Seng
Singapore 288407 (SG)**
• **Wang, Ying-Jian
Singapore 640170 (SG)**

(74) Representative: **Viering, Jentschura & Partner
Postfach 22 14 43
80504 München (DE)**

(54) **Leaded integrated circuit inspection system**

(57)     An inspection system for inspection of an object like a leaded integrated circuit. The system comprises a datum (1) with an aperture (2) formed therein, wherein the object (10) to be inspected is to be placed in overlapping relationship with the aperture (2) of the datum (1). It also has a diffuse light source (3) for irradiating diffuse light through the aperture (2) thereby projecting a lead-including contour of the object (10) and a contour of the reference edge (12) through the aperture (2), and an optical prism (5) having an external and an internal reflection surface (51, 52) for receiving and reflecting two selected projections of the contours along two respective projection paths. The system is configured such that the two projection paths between the contour and the imaging plane have the same optical length.

Figure 1

**Description**

The invention relates to an apparatus for inspecting a leaded integrated circuit.

In the manufacture of electronic components having a plurality of pins or leads, such as integrated circuits, inspection systems using an optical system have been proposed which provide three-dimensional inspection of electronic components.

In order to obtain a three-dimensional inspection of integrated circuits it was further proposed to provide at least two optical paths along which different images of the integrated circuit to be inspected are transmitted to an image sensor.

For example, in U.S. patent No. 5,909,285 a method for inspection of integrated circuits is disclosed which includes a camera to image a precision pattern mask deposited on a transparent reticle to be inspected. The integrated circuit to be inspected is illuminated using diffused light. A side view of the integrated circuit is reflected to the camera by using an overhead mirror or prism. However, this method uses front lighting and further requires the integrated circuit to be exactly positioned on the transparent reticle.

From U.S. patent No. 5,910,844 a vision inspection system is known in which eight optical images are instantaneously recorded on singular image frames which are output from two optical cameras. The inspection system according to U.S. patent 5,910,844 requires complex optical reflecting means using a plurality of optical directing members. However, according to U.S. patent 5,910,844, the optical directing members have to be selectively adjusted when objects of various sizes are inspected.

Moreover, from U.S. patent application No. 09/205,852 an optical inspection system for determining positional information of an object with respect to a reference is known. A datum, which is used as a reference of the system, is placed in proximity to the object to be inspected. Further, a diffuse light source is provided for illuminating the object. The light source is set up such that a point on the object and a point on the datum will lie in the same plane as their images along at least two optical paths that form an angle with one another. Further, an imaging subsystem is provided which captures images along the two optical paths. The captured images are correlated and analyzed by the imaging subsystem in order to provide positional information of the point on the object with respect to the point on the datum. According to U.S. patent application 09/205,852 it is possible to form the two optical paths which are relayed on the imaging subsystem by using a trapezoidal prism for one optical path and a mirror for the other optical path. Further, it is also possible to use one single trapezoidal prism for providing the two optical paths. In this way, one optical path is formed along an internal surface of the trapezoidal prism and the other optical path is formed along an external surface of the trapezoidal prism.

However, according to U.S. patent application 09/205,852, the two optical paths differ in optical length such that the image quality and thus the precision of the inspection system suffers. Further, in the case in which two sides of an object, e.g. of a dual sided IC, are inspected by using two of the optical arrangements for providing two optical paths each as disclosed in US 09/205,852, a large sensor area is required in the optical subsystem for capturing the images resulting from the two optical paths due to a large blank area existing in the central portion of the image produced by the inspection system.

The invention provides an inspection system for inspection of objects in form of leaded integrated circuits. A system according to the invention comprises a datum with an aperture therein defined by reference edges, the datum providing a reference plane which is at least substantially perpendicular to the optical axis of the system, wherein the object to be inspected is to be positioned e.g. by an object carrier in overlapping relationship with the aperture of the datum, a diffuse light source for radiating diffuse light through the aperture thereby projecting a lead-including contour of the object and a contour of the reference edge through the aperture in several projection directions, an optical prism for receiving the projections of the contours and for selecting two of the projections received from different projection directions. The optical prism comprises an external reflection surface for reflecting one of the two selected projections of the contours into a reflection direction towards an imaging plane. Further, the optical prism comprises an entrance surface, an exit surface and an internal reflection surface cooperating with the entrance surface and the exit surface for internal reflection of the other one of the two selected projections of the contours through the exit surface of the optical prism in an exit direction toward the imaging plane in such a way that a first projection path between the contour and the imaging plane for light rays of the one selected projection and a second projection path between the contour and the imaging plane of light rays for the other selected projection have the same optical length

According to a preferred embodiment of the present invention it is possible to arrange two or more optical prisms in order to measure or inspect for example two sides of a dual-sided integrated circuit. Thereby, the first side and the second side of the dual-sided integrated circuit are inspected simultaneously.

Further, in order to reduce the image area required for capturing an image of the projections provided by the two optical prisms, one for each side of the integrated circuit to be inspected, rhomboid prisms are provided which effect redirection of the first projection path and of the second projection path in parallel to and close to the optical axis of the system. The image area for the dual-side inspection is therefore reduced, leading to an improvement of the effective image resolution and thus to improved measurement accuracy.

The images produced by the inspection system are preferably captured by a video camera and are then digitized and processed by a processor of a computer in order to determine the 3-D coordinates of the objects with respect to the datum.

To illustrate the invention a preferred embodiment will be described herein with reference to the accompanying drawings. In the drawings

Figure 1 shows a schematic view of the inspection system according to the preferred embodiment of the invention;

Figure 2 shows a cross-sectional view of an optical prism according to the preferred embodiment of the invention;

Figure 3 shows a detailed cross-sectional view of the optical prism according to the preferred embodiment of the present invention;

Figure 4 shows a top view of the preferred embodiment of the present invention; and

Figure 5 shows the image captured by the inspection system according to the preferred embodiment of the invention.

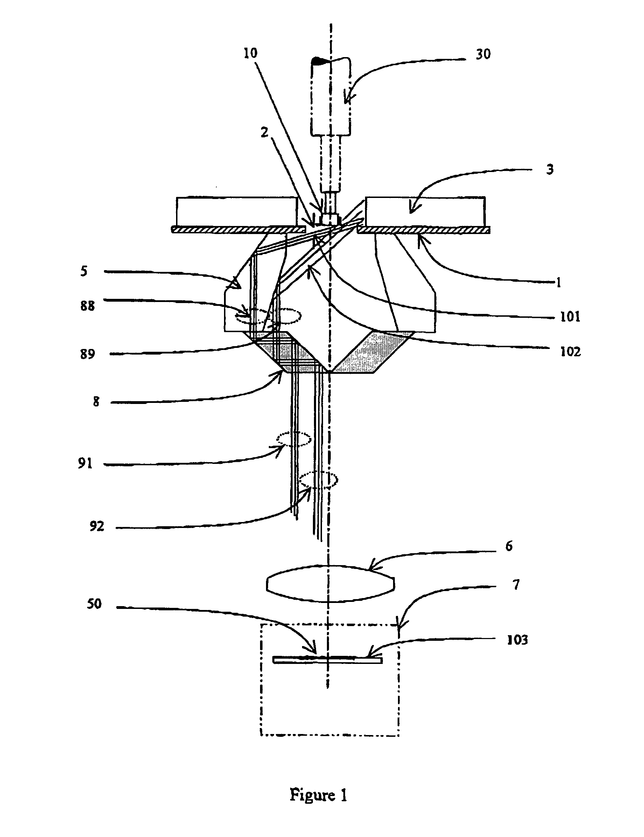

An inspection system for inspection of an object in the form of a leaded integrated circuit according to one preferred embodiment of the invention is illustrated in Figure 1 and comprises: a datum 1 with an aperture 2 therein defined by a reference edge 12, the datum 1 providing a reference plane which is perpendicular to the optical axis of the system, an object carrier 30 for positioning the object 10 in overlapping relationship with the aperture 2 of the datum 1, a diffuse light source 3 for radiating diffuse light through the aperture 2 thereby projecting a lead-including contour of the object 10 and a contour of the reference edge 12 through the aperture 2 in several projection directions, an optical prism 5 for receiving the projections of the contours and for selecting two of the projections received from different projection directions, the optical prism 5 having an external reflection surface 51 for reflecting one of the two selected projections of the contours into a reflection direction towards an imaging plane, and having an entrance surface, an exit surface and an internal reflection surface 52 cooperating with the entrance surface and the exit surface for internal reflection of the other one of the two selected projections of the contours through the exit surface of the optical prism in an exit direction toward the imaging plane in such a way that a first projection path between the contour and the imaging plane for light rays of the one selected projection and a second projection path between the contour and the imaging plane of light rays for the other selected projection have the same optical length.

The lighting 3 is preferably arranged on top of the datum 1, but can also be arranged over the datum. An object 10 is held and positioned in the neighborhood of and overlapping the aperture 2 by an object carrier 30 which preferably has a vacuum tip in order to hold the object 10 from above. Preferably the object 10 can be an integrated circuit having a plurality of pins or leads. Two optical prisms 5 are arranged at the bottom of the datum, one for inspecting each side of the object 10. Two rhomboid prisms 8 are arranged below the the optical prisms 5 and are directed towards the optical axis of the inspection system. A lens 6 attached to a video camera 7 is arranged in alignment with the optical axis of the system. Both the lens 6 and the video camera 7 are used for capturing an image 50 being projected from the contours of the object 10 and the edge 12 of the datum, respectively, towards the imaging plane. The object carrier 30 and the object 10 are also aligned with the optical axis of the system. Further, the special prisms 5 and the rhomboid prisms 8 are each arranged symmetrically with respect to the optical axis of the system. The lighting 3 provides a diffused back-lighting of the object 10. Thus, the leads or pins 81 of the object 10 and the package body 82 of the object 10 are back-lighted by the lighting 3 through the aperture 2 of the datum 1 towards the optical prisms 5.

Preferably the lighting 3 emits a light of a single wavelength or a narrow bandwidth of wavelengths in order to reduce the colour dispersion which might otherwise be caused by the long travel distance in the optical prisms 5. Such a narrow bandwidth of the lighting 3 can for example be realized by a filter.

The datum 1 provides a reference plane to the system. Preferably, the datum 1 and accordingly the reference plane is perpendicular to the optical axis of the system. An aperture 2 is formed in the datum 1 and defined by four reference edges 12 or two pairs of parallel reference edges 12. The distance between two opposite reference edges 12 is known. The distance between two opposite reference edges 12 of the datum 1 is slightly greater than the outer dimension of the largest integrated circuit 10 to be inspected. In order to provide a stable reference plane, the datum 1 is made of a mechanically strong and stable material such as carbide or Invar. The top surface of the datum 1 is ground and polished to a very high flatness. The reference edges 12 of the datum 1 are formed sharp, straight and accurately finished. The aperture wall 83 of the datum 1 constituting the reference edges 12 can be blackened in order to avoid or reduce reflection from the opposite lighting. Since datum 1 provides the reference plane, its top surface can for example be defined as z = 0. The system derives the relative positions of the features such as lead tips and package outline of the object 10 and computes the mechanical parameters like lead pitch and terminal dimensions by correlating and analyzing the captured pictures.

On a sensor plate 103 of the video camera 7, a single image 50 is captured, comprising of projections of the contour of the reference edge 12 of the datum 1 and the contours of the leads 81 and the package body 82 of the object 10. This image 50 is generated by projecting the contours of the reference edge 12 of the datum 1, the lead tips 81 and the package body 82 of the object 10 along two projection paths 91 and 92 having two different directions corresponding to two different viewing angles θ1 and θ2, respectively, and thus containing three-dimensional information. The image 50 captured by the video camera 7 is digitized and analyzed using a digital image processing means, such as an edge detection means.

As can be further seen from Figure 1, one point of the object 10 to be inspected can be viewed along two projection paths 91 and 92 provided by the optical prism 5 and guided through the rhomboid prism 8. The two different projection paths 91 and 92 provide two different views with two different viewing angles θ1 and θ2 of one object point.

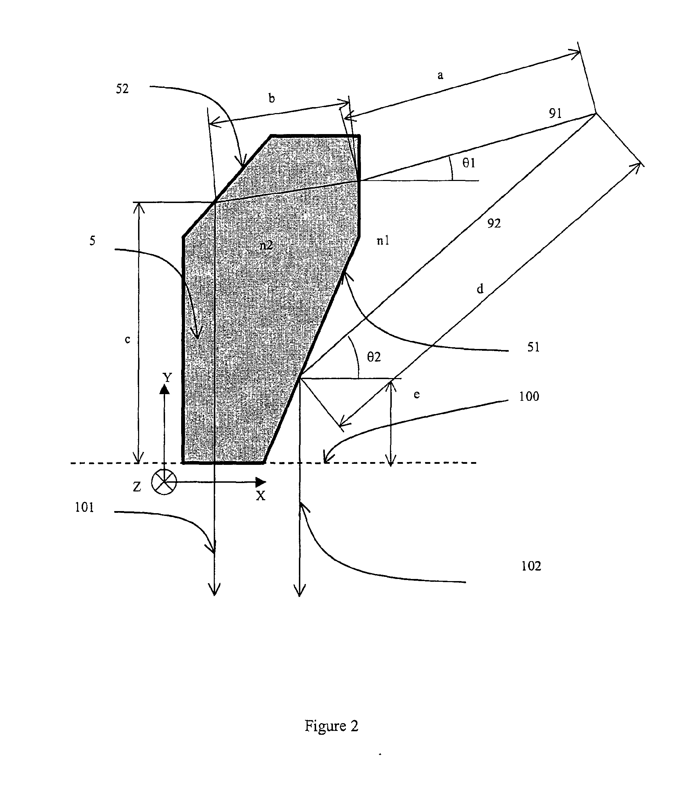

As shown in Figure 2, the optical prism 5 has a six-sided cross-section and has eight side surfaces. Two nonadjacent side surfaces 51 and 52 of the specially shaped optical prism 5 are tightly aligned with each other such that the plane in which the one side surface 51 lies and the plane in which the other side surface 52 lies enclose a predetermined angle with each other. This predetermined angle provides, in cooperation with an entrance surface of the optical prism 5, the two different viewing angles θ1 and θ2. Preferably, the angle between the two side surfaces of the optical prism 5 is formed with an accuracy of few arc minutes, more preferably 5 arc minutes. For an optimum inspection result, the first viewing angle θ1 should be as small as possible, i.e. 0° and the second viewing angle θ2 should be as large as possible, i.e. 90°. However, in order to leave enough of a margin in the projected image 50 between the projection of the contour of the lead tip 81 and the projection of contour of the reference edge 12, θ1 is preferably 12° and θ2 is preferably 43°.

The first projection path 91 is enabled by total internal reflection at the internal surface 52 of the optical prism 5. This first projection path 91 is correlated with the first viewing angle θ1. It is possible that refraction occurs at the entrance surface and at the exit surface of the optical prism depending on the angle of the entrance surface and the exit surface of the optical prism 5 with regard to the first projection path 91, respectively.

The second projection path 92 is provided by external reflection at the surface 51 of the optical prism 5. This second projection path 92 is correlated with the second viewing angle θ2. The refractive index of the optical prism 5 is higher than that of the other medium outside the special shape prism. According to the preferred embodiment of the invention, the other medium is air having an refractive index of 1.

Between the plane 100 and the imaging plane, as indicated in Figure 1, the first projection path 91 and the second projection path 92 are in parallel to the optical axis of the system.

The optical length difference δ between the first projection path 91 and the second projection path 92 at a surface 100 can be calculated from Formula 1:

$$\delta = a/n1 + (b+c)/n2 - (d+e)/n1$$

Wherein a, b, c, d, e are the partial lengths of the projection paths 91 and 92 as shown in Figure 2, nl is the refractive index of the medium outside the optical prism 5 and n2 is the refractive index of the material of the optical prism 5. The optical length is referred to herein as $L_o = L_g/n$, wherein $L_o$ is the optical length, $L_g$ is the geometrical length and n is the refractive index of the material in which the geometrical length extends.

Since the medium outside the special shape prism 5 is preferably air, n1 is equal to 1 such that Formula 1 can be written as:

$$\delta = a + (b+c)/n - d - e$$

By choosing a material having a suitable refractive index n2, the optical length difference δ between the first projection path 91 (a+b+c) and the second projection path (d+e) is compensated.

It is also possible to use another medium than air as the other medium, for example another gas or a fluid or glass.

As mentioned above, one aspect of influencing the optical length of the two projection paths 91 and 92 coming from the same object point such as the reference edge 12 or the lead tips 81 of the object and being reflected at the surfaces 52 and 51 at the viewing angles θ1 and θ2, respectively, is choosing a suitable optical material for the optical prism 5.

A further aspect of minimizing the length difference between the two projection paths is providing appropriate viewing angles θ1 and θ2 as well as suitable dimensions of the optical prism 5.

According to the preferred embodiment of the invention a further aspect of influencing the equalization of the length of the two projection paths 91 and 92 is the dimension of the aperture 2 of the datum 1 and the arrangement of the optical prisms 5 with respect to the datum 1 and the aperture 2 of the datum 1.

According to the preferred embodiment of the invention, the length difference between two light rays 101 and 102 at an exit plane 100 being arranged in parallel to the datum 1 and aligned with the bottom surface of the optical prism 5, is compensated while the maximum allowable angular difference between the two viewing angles θ1 and θ2 is retained and a sufficient margin between the lead tip 81 and the reference edge 12 is maintained in the image 50.

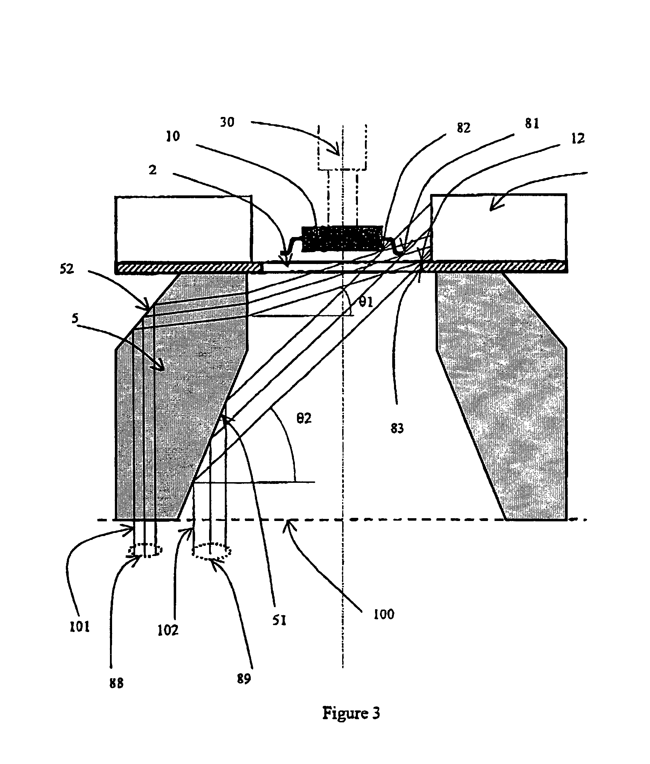

As shown in Figure 3, if the two bundles of rays 88 and 89 being reflected along the first projection path 91 and along the second projection path 92, respectively, would enter the lens 6 directly, a considerable blank area in the central portion of the image 50 would be the result. Since it is undesirable to have this blank area in the image 50, according to the preferred embodiment of the invention, two rhomboid prisms 8 are provided which redirect the two projection paths 91 and 92 such that the first projection path 91 and the second projection path 92 run closer to the optical axis of the system than the two rays of light 88 and 89 do when they cross the plane 100. It is in this way that, according to the preferred embodiment of the invention, the effective pixel resolution of the image 50 is increased, since the two rhomboid prisms 8 being placed below the optical prisms 5 effect a parallel shifting of the two projection paths 91 and 92, respectively, towards the optical axis of the system.

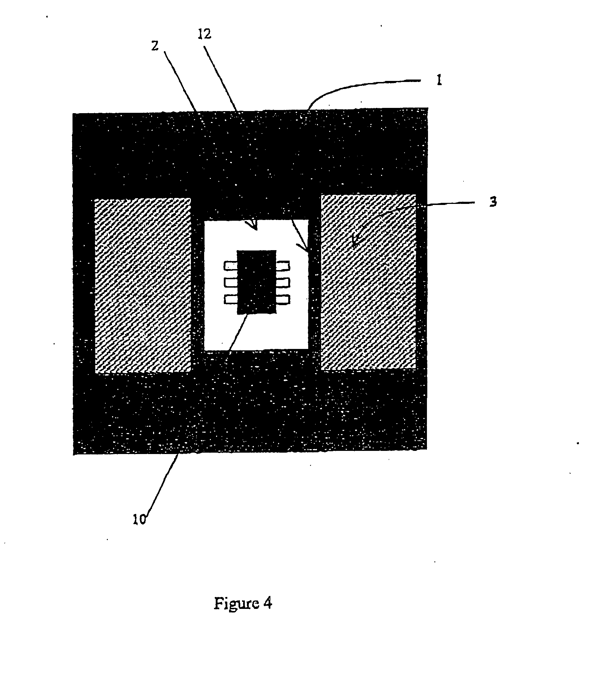

Figure 4 shows a top view of the preferred embodiment of the invention. An object 10, preferably a dual-sided integrated circuit having a small number of leads or pins at each side, for example three leads per side, is arranged overlapping the aperture 2 of datum 1. Two lightings 3 are provided on the upper surface of the datum 1, each for providing back-light to the respective sides of the object 10.

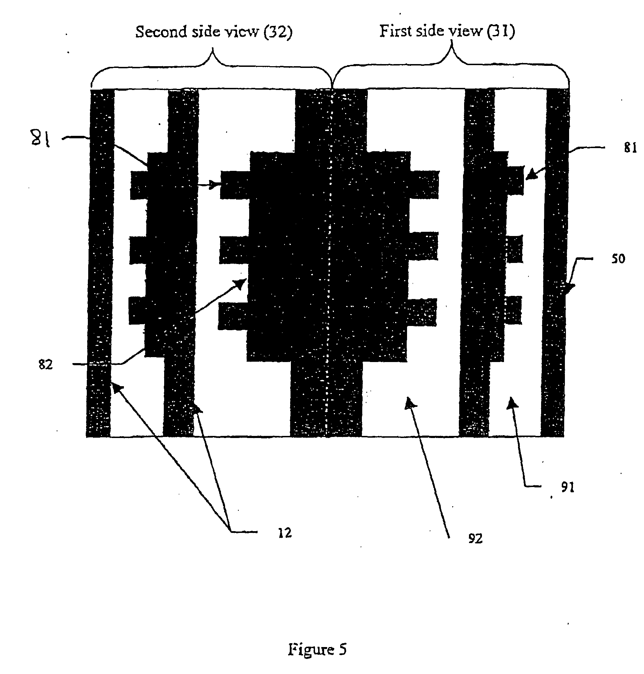

Figure 5 shows a view of the image as captured by the camera when an integrated circuit, as shown in Figure 4, is used as object 10. A first side view 31 is projected by one of the lightings 3 by projecting the contours of one reference edge 12 of the datum 1, of the package body 82 and of the leads 81 of one side of the integrated circuit 10 through the aperture 2 and along the first projection path 91 as well as along the second projection path 92 selected by the optical prism 5. The rhomboid prism 8 redirects the two projection paths 91 and 92 in parallel and towards the optical axis of the system.

A symmetrical arrangement of the optical prism 5, the rhomboid prism 8, a lighting 3 as well as the reference edge 12 of the datum 1 can provide a second side view, as shown in Figure 5, which is projected in the same way as the first side view is projected. Thus, according to preferred embodiments of the invention, it is possible to inspect two sides of an integrated circuit 10 simultaneously.

Although the invention has been described with respect to preferred embodiments in detail, it should be understood that various changes, substitutions and alterations can be made therein without departing from the spirit and scope of the invention as defined by the appended claims.

## Claims

1. An inspection system for inspection of an object in form of a leaded integrated circuit, the system comprising:

a datum (1) with an aperture (2) therein defined by a reference edge (12), the datum (1) providing a reference plane which is at least substantially perpendicular to the optical axis of the system, wherein the object (10) to be inspected is to be positioned in overlapping relationship with the aperture (2) of the datum (1),
a diffuse light source (3) for irradiating diffuse light through the aperture (2) thereby projecting a lead-including contour of the object (10) and a contour of the reference edge (12) through the aperture (2) in several projection directions,
an optical prism (5) for receiving the projections of the contours and for selecting two of the projections received from different projection directions,
the optical prism (5) having an external reflection surface (51) for reflecting one of the two selected projections of the contours into a reflection direction towards an imaging plane, and having an entrance surface, an exit surface and an internal reflection surface (52) cooperating with the entrance surface and the exit surface for internal reflection of the other one of the two selected projections of the contours through the exit surface of the optical prism in an exit direction toward the imaging plane in such a way that a first projection path between the contour and the imaging plane for light rays of the one selected projection and a second projection path between the contour and the imaging plane of light rays for the other selected projection have the same optical length.

2. The system according to claim 1, further comprising:

an image detection system arranged at the imaging plane for detecting an image (50) of the two projections of the contours.

3. The system according to claim 2, wherein the image detection system comprises a lens (6) and a camera (7) with an image sensor (103).

4. The system according to any one of claims 1 to 3, wherein the directions from which the two projections of the contours are received correspond to a first viewing angle ($\Theta$1) and to a second viewing angle ($\Theta$2), respectively.

5. The system according to any one of claims 1 to 4, further comprising a rhomboid prism (8) being arranged between the optical prism (5) and the imaging plane for parallel redirecting the first projection path (92) and the second projection path (91) parallel to and closer towards the optical axis of the system.

**6.** The system according to any one of claims 1 to 5, wherein the contour of the object (10) comprises a lead tip (81) and a package body (82) of the object (10).

**7.** The system according to any one of claims 1 to 6, further comprising an object carrier (30) for positioning the object (10) in overlapping relationship with the aperture (2) of the datum (1).

Figure 1

Figure 2

.

EP 1 139 090 A2

Figure 3

9

Figure 4

Second side view (32)　　　First side view (31)

81

81

50

82

91

12

92

Figure 5